# EUROPEAN PATENT SPECIFICATION

(11) **EP 2 564 577 B1**
(45) Date of publication and mention of the grant of the patent: **27.11.2019**
(21) Application number: 11718315.2
(22) Date of filing: 18.04.2011
(51) Int. Cl.: G06Q 30/02, G06Q 50/00, H04W 4/21, H04L 29/08

(54) **CONTEXT DEPENDENT UPDATE IN A SOCIAL NETWORK**
KONTEXTABHÄNGIGE AKTUALISIERUNG IN EINEM SOZIALEN NETZWERK
ACTUALISATION DÉPENDANT DU CONTEXTE DANS UN RÉSEAU SOCIAL

(30) Priority: 26.04.2010 US 767771
(43) Date of publication of application: 06.03.2013
(73) Proprietor: QUALCOMM Incorporated, San Diego, CA 92121-1714 (US)
(72) Inventor: WHALE, Peter, Cambridge Cambridgeshire CB4 0WN (GB)
(74) Representative: Dunlop, Hugh Christopher
(86) International application number: PCT/EP2011/056168
(87) International publication number: WO 2011/134833

(56) References cited:
- US-A1- 2004 068 552
- US-A1- 2005 075 097
- US-A1- 2007 281 689
- GUY SHANI ET AL: "Establishing User Profiles in the MediaScout Recommender System", COMPUTATIONAL INTELLIGENCE AND DATA MINING, 2007. CIDM 2007. IEEE SYMP OSIUM ON, IEEE, PI, 1 April 2007 (2007-04-01), pages 470-476, XP031095478, ISBN: 978-1-4244-0705-7

## Description

### BACKGROUND

The present disclosure relates to a mobile operating environment, and more particularly, to providing improved methods of generating recommendations to users of a mobile device.

Mobile operators or mobile device carriers play a major part in the telecommunication industry today. Initially, such mobile operators concentrated their efforts on generating revenue by increasing their subscriber base. However, it will be appreciated that in several countries, the scope for increasing the subscriber base has now become very limited, as the market has reached close to saturation point. As a result, the mobile operators have been branching out to provide value added services to subscribers, in order to increase their revenue.

One means of generating increased revenue is through the sales of premium services to users, such as ringtones, wallpaper, games, widgets and Java games, etc. These services may be provided by the mobile operator themselves, or by business entities who may operate in collaboration with the mobile operators to provide such services. The services may be available for download to a user's mobile device upon payment of a fee.

Many benefits such as maximizing the potential earnings for sales accrue upon recommending and promoting to users content or services that are most likely to be of interest to the users. The user can have a better experience using their mobile device in light of these individually recommended content and services.

However, providing helpful suggestions to a user of a mobile device can be thwarted by how mobile devices are used. For example, a number of users can use the same mobile device, each user having different preferences and interests. As another example, a user can make a limited number of purchases or interactions from which to derive recommendations for future transactions. As an additional aspect, soliciting user inputs to improve recommendations can prove tedious or intrusive to some users, who thus would refuse to participate.

US 2004/0068552 relates to a method and apparatus for dynamically tailoring selection of rich content for recommendation to a user. A server process provides a client process with a list of recommended content, and the user selects content from the list. The content selected by the 5 user is then returned to the client process.

US 2007/0281689 relates to a location-based social network manager process. The geographic location of a mobile communication device operated by a user within an area is determined. A map representation of the area is displayed, upon which is superimposed the locations of other 10 users of mobile communication devices.

Shani, G. et al., "Establishing User Profiles in the MediaScout Recommender System" (Proceedings of the 2007 IEEE Symposium on Computational Intelligence and Data Mining, pages 470-476) relates to a stereotype-based recommendation engine. New users are classified 15 to clusters through a questionnaire that is generated automatically from the stereotypes after each update.

### SUMMARY

In accordance with the invention, there is provided: a method for recommending an action to a user as recited in claim 1; a computer program product as recited in claim 14; and an apparatus as recited in claim 15.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with facilitating automatic or manual social network status postings ("micro-blogging"). In particular, by determining a context of a user of a user device, suggestions can be made for such a posting as well as related opportunities for presenting revenue-generating offers based upon these micro-blogging instances.

In one aspect, a method is provided for recommending an action to a user by determining a human context corresponding to a user of a user device, proposing a recommended action based on the human context, receiving a response to the recommended action, and communicating information based upon the response.

In another aspect, a computer program product including a computer-readable medium for recommending an action to a user is provided. The computer-readable storage medium comprises at least one instruction for causing a computer to determine a human context corresponding to a user of a user device. At least one instruction causes the computer to propose a recommended action based on the human context. At least one instruction causes the computer to receive a response to the recommended action. At least one instruction causes the computer to communicate information based upon the response.

In an additional aspect, an apparatus is provided for recommending an action to a user. Means are provided for determining a human context corresponding to a user of a user device. Means are provided for proposing a recommended action based on the human context. Means are provided for receiving a response to the recommended action. Means are provided for communicating information based upon the response.

In another additional aspect, at least one processor is provided for recommending an action to a user. A module determines a human context corresponding to a user of a portable user device. A module transmits to the portable user device to prompt proposing a recommended action based on the human context. A module receives a report from the portable user device based upon a response to the recommended action. A module communicates information based upon the response.

In a further aspect, an apparatus is provided for recommending an action to a user. A computing platform determines a human context corresponding to a user of a user device and proposes a recommended action based on the human context. A user interface receives a response from the user to the context message. A network interface communicates information based upon the response.

In yet one aspect, a method is provided for recommending an action to a user by determining a human context corresponding to a user of a portable user device, transmitting data to the portable user device to prompt proposing a recommended action based on the human context, receiving a report from the portable user device based upon a response to the recommended action, and communicating information based upon the response.

In yet another aspect, a computer program product including a computer-readable storage medium for recommending an action to a user is provided for. The computer-readable storage medium comprises at least one instruction for causing a computer to determine a human context corresponding to a user of a portable user device. At least one instruction causes the computer to transmit data to the portable user device to prompt proposing a recommended action based on the human context. At least one instruction causes the computer to receive a report from the portable user device based upon a response to the recommended action. At least one instruction causes the computer to communicate information based upon the response.

In yet an additional aspect, an apparatus is provided for recommending an action to a user. Means are provided for determining a human context corresponding to a user of a portable user device. Means are provided for transmitting data to the portable user device to prompt proposing a recommended action based on the human context. Means are provided for receiving a report from the portable user device based upon a response to the recommended action. Means are provided for communicating information based upon the response.

In yet another additional aspect, at least one processor is provided for recommending an action to a user. A module determines a human context corresponding to a user of a user device. A module proposes a recommended action based on the human context. A module receives a response to the recommended action. A module communicates information based upon the response.

In yet a further aspect, an apparatus is provided for recommending an action to a user. A computing platform determines a human context corresponding to a user of a portable user device. A transmitter transmits data to the portable user device to prompt proposing a recommended action based on the human context. A receiver receives a report from the portable user device based upon a response to the recommended action. A network interface communicates information based upon the response.

In one aspect, a method is provided for recommending content to a user by determining a human context of a user of a user device, proposing a context message on a user interface of the user device, receiving a response from the user via the user interface to the context message, and communicating a posting to a social network based upon the response.

In another aspect, a computer program product including a computer-readable storage medium for recommending content to a user is provided. The computer-readable storage medium comprises at least one instruction for causing a computer to determine a human context of a user of a user device. Also, at least one instruction causes the computer to propose a context message on a user interface of the user device. Further, at least one instruction causes the computer to receive a response from the user via the user interface to the context message. Additionally, at least one instruction causes the computer to communicate a posting to a social network based upon the response.

In an additional aspect, an apparatus is provided for recommending content to a user. Means are provided for determining a human context of a user of a user device. Means are provided for proposing a context message on a user interface of the user device. Means are provided for receiving a response from the user via the user interface to the context message. Means are provided for communicating a posting to a social network based upon the response.

In a further aspect, an apparatus is provided for recommending content to a user. A computing platform determines a human context of a user of a user device and proposes a context message on the user interface of the user device. The user interface further receives a response from the user to the context message. A network interface communicates a posting to a social network based upon the response.

In yet one aspect, a method is provided for recommending content to a user by determining a human context of a user of a portable user device, transmitting data to the portable user device to prompt proposing a context message on a user interface, receiving a report from the portable user device based upon a response from the user via the user interface to the context message, and communicating a posting to a social network based upon the response.

In yet another aspect, a computer program product is provided for recommending content to a user. A computer-readable storage medium comprises at least one instruction for causing a computer to determine a human context of a user of a portable user device. Also, at least one instruction causes the computer to transmit data to the portable user device to prompt proposing a context message on a user interface. Further, at least one instruction causes the computer to receive a report from the portable user device based upon a response from the user via the user interface to the context message. Additionally, at least one instruction causes the computer to communicate a posting to a social network based upon the response.

In yet an additional aspect, an apparatus is provided for recommending content to a user. Means are provided for determining a human context of a user of a portable user device. Means are provided for transmitting data to the portable user device to prompt proposing a context message on a user interface. Means are provided for receiving a report from the portable user device based upon a response from the user via the user interface to the context message. Means are provided for communicating a posting to a social network based upon the response.

In yet a further aspect, an apparatus is provided for recommending content to a user. A computing platform determines a human context of a user of a portable user device. A transmitter transmits data to the portable user device to prompt proposing a context message on a user interface. A receiver receives a report from the portable user device based upon a response from the user via the user interface to the context message. A network interface communicates a posting to a social network based upon the response.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates a block diagram for communication network of a user device and a network cooperate in performing harvesting contextual information from users by use of computer-assisted social blogging in order to improve real-time recommendations, according to one aspect.
FIG. 2A illustrates a flow diagram for recommending an action to a user of a user device based upon a human context, according to another aspect.
FIG. 2B illustrates a flow diagram for performing a methodology or sequence of operations for communication network to perform harvesting contextual information from users by use of computer-assisted social blogging in order to improve real-time recommendations, according to another aspect.
FIG. 3 illustrates a flow diagram for a methodology or sequence of operations utilizes profile information and current status determinations for micro-blogging with related transaction offers, according to another aspect.
FIG. 4 illustrates a depiction of a touch screen user interface of a user device, according to another aspect.
FIG. 5 illustrates a block diagram of a distributed system of a server and a client that performs harvesting contextual information from users by use of computer-assisted social blogging in order to improve real-time recommendations, according to another aspect.
FIG. 6 illustrates a block diagram of a distributed recommendation system performed across a wireless communication system, according to another aspect.
FIG. 7 illustrates a block diagram of an exemplary computing environment, according to another aspect.
FIG. 8A illustrates a block diagram for a system such as user equipment for performing automated recommendations for a proposed action by a user of a user device based upon a human context, according to another aspect.
FIG. 8B illustrates a block diagram for a system such as user equipment for performing computer assisted social blogging and receiving recommendations, according to another aspect.
FIG. 9A illustrates a block diagram for a system such as a network entity for performing computer assisted selecting and transmitting recommendations for an action to user equipment based upon human context, according to another aspect.
FIG. 9B illustrates a block diagram for a system such as a network entity for performing computer assisted social blogging and transmitting recommendations to user equipment, according to another aspect.
FIG. 10A illustrates a means for harvesting contextual information from users in order to improve real-time recommendations at a network, according to another aspect.
FIG. 10B illustrates a means for harvesting contextual information from users by use of computer-assisted social blogging in order to improve real-time recommendations at a network, according to another aspect.
FIG. 11A illustrates a means for harvesting contextual information from users to improve real-time recommendations at user equipment, according to another aspect.
FIG. 11B illustrates a means for harvesting contextual information from users by use of computer-assisted social blogging in order to improve real-time recommendations at user equipment, according to another aspect.

### DETAILED DESCRIPTION

User desire for goods and services change with the individual's context or mood (e.g., is the user currently hungry, tired, feeling sociable, in need of entertainment in some down time, has some time to shop, etc.) If a user were able to inform a recommendation system of their context or mood very frequently (e.g., more than once an hour), then such a system could serve more targeted recommendations for goods and services. However the motivation for a user to constantly update their context is low. One problem to be solved, therefore, is ascertaining user context easily with minimal user effort required, in return for the benefit of highly relevant recommendations.

In an exemplary aspect, knowledge of a user's profile (contextual and behavioral) can be used to predict the likely current real-time needs of the user. Confirmation of that need can be achieved by suggesting a number of personalized status updates (based on known profile information) in a form suitable for posting to micro-blogging sites. From this list, the user selects the most appropriate one to submit to a micro-blog. In doing so, valuable profile information is confirmed which allows real-time contextual recommendations to be generated to meet the recently identified need of the user. In one aspect, these recommendations are revenue generating opportunities.

It should be appreciated with the benefit of the present disclosure that a status update to a social network can address a number of scenarios, of which the illustrative micro-blogging for alerting friends, acquaintances, and fans is exemplary. The context of an individual can be influenced by, or as a result of, the context of other individuals or groups. Consequently, a social network can broadly address communications amongst a group of individuals responsive to the human context.

More generically the innovation provides a very convenient method for users who wish to transmit frequently changing information and instructions to other users and to other computer systems, based on information collected by a system on their behalf and processed into recommended actions to follow as a result of analyzing the input data.

So by way of an example, a medical application could be a community doctor who is responsible for the care of a number of out-patients. Each patient has a sensor system attached to them which can report vital signs back to a system, such as heart-rate, blood pressure, etc., and perhaps their location. The system could analyze the sensor data and make suggestions to the doctor such as "Blood pressure of patient X is 10% higher than normal - do you want to arrange to see the patient in surgery this week?" The doctor can make the judgment as to the course of action, and if (s)he accepts the recommendation then the request to book an appointment and notify the patient could be made to an external system.

Various aspects of the disclosure are further described below. It should be apparent that the teaching herein can be embodied in a wide variety of forms and that any specific structure or function disclosed herein is merely representative. Based on the teachings herein one skilled in the art should appreciate that an aspect disclosed herein can be implemented independently of other aspects and that two or more of these aspects can be combined in various ways. For example, an apparatus can be implemented or a method practiced using any number of the aspects set forth herein. In addition, an apparatus can be implemented or a method practiced using other structure or functionality in addition to or other than one or more of the aspects set forth herein. As an example, many of the methods, devices, systems, and apparatus described herein are described in the context of providing dynamic queries and recommendations in a mobile communication environment. One skilled in the art should appreciate that similar techniques could apply to other communication and non-communication environments as well.

As used in this disclosure, the term "content" and "objects" are used to describe any type of application, multimedia file, image file, executable, program, web page, script, document, presentation, message, data, meta-data, or any other type of media or information that may be rendered, processed, or executed on a device.

As used in this disclosure, the terms "component," "system," "module," and the like are intended to refer to a computer-related entity, either hardware, software, software in execution, firmware, middle ware, microcode, or any combination thereof. For example, a component can be, but is not limited to being, a process running on a processor, a processor, an object, an executable, a thread of execution, a program, or a computer. One or more components can reside within a process or thread of execution and a component can be localized on one computer or distributed between two or more computers. Further, these components can execute from various computer readable media having various data structures stored thereon. The components can communicate by way of local or remote processes such as in accordance with a signal having one or more data packets (e.g., data from one component interacting with another component in a local system, distributed system, or across a network such as the Internet with other systems by way of the signal). Additionally, components of systems described herein can be rearranged or complemented by additional components in order to facilitate achieving the various aspects, goals, advantages, etc., described with regard thereto, and are not limited to the precise configurations set forth in a given figure, as will be appreciated by one skilled in the art.

Additionally, the various illustrative logics, logical blocks, modules, and circuits described in connection with the aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A general-purpose processor can be a microprocessor, but, in the alternative, the processor can be any conventional processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other suitable configuration. Additionally, at least one processor can comprise one or more modules operable to perform one or more of the operations or actions described herein.

Moreover, various aspects or features described herein can be implemented as a method, apparatus, or article of manufacture using standard programming or engineering techniques. Further, the operations or actions of a method or algorithm described in connection with the aspects disclosed herein can be embodied directly in hardware, in a software module executed by a processor, or in a combination of the two. Additionally, in some aspects, the operations or actions of a method or algorithm can reside as at least one or any combination or set of codes or instructions on a machine-readable medium or computer readable medium, which can be incorporated into a computer program product. Further, the term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., card, stick, key drive, etc.). Additionally, various storage media described herein can represent one or more devices or other machine-readable media for storing information. The term "machine-readable medium" can include, without being limited to, wireless channels and various other media capable of storing, containing, or carrying instruction, or data.

Furthermore, various aspects are described herein in connection with a mobile device. A mobile device can also be called a system, a subscriber unit, a subscriber station, mobile station, mobile, mobile device, cellular device, multi-mode device, remote station, remote terminal, access terminal, user terminal, user agent, a user device, or user equipment, or the like. A subscriber station can be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem or similar mechanism facilitating wireless communication with a processing device.

In addition to the foregoing, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. Furthermore, as used in this application and the appended claims, the term "or" is intended to mean an inclusive "or" rather than an exclusive "or." That is, unless specified otherwise, or clear from context, "X employs A or B" is intended to mean any of the natural inclusive permutations. That is, in this example, X could employ A, or X could employ B, or X could employ both A and B, and thus the statement "X employs A or B" is satisfied under any of the foregoing instances. In addition, the articles "a" and "an" as used in this application and the appended claims should generally be construed to mean "one or more" unless specified otherwise or clear from context to be directed to a singular form.

As used herein, the terms to "infer" or "inference" refer generally to the process of reasoning about or deducing states of a system, environment, or user from a set of observations as captured via events or data. Inference can be employed to identify a specific context or action, or can generate a probability distribution over states, for example. The inference can be probabilistic--that is, the computation of a probability distribution over states of interest based on a consideration of data and events. Inference can also refer to techniques employed for composing higher-level events from a set of events or data. Such inference results in the construction of new events or actions from a set of observed events or stored event data, whether or not the events are correlated in close temporal proximity, and whether the events and data come from one or several event and data sources.

Various aspects are now described with reference to the drawings. In the following description, for purposes of explanation, numerous specific details are set forth in order to provide a thorough understanding of one or more aspects. It may be evident, however, that the various aspects may be practiced without these specific details. In other instances, well-known structures and devices are shown in block diagram form in order to facilitate describing these aspects

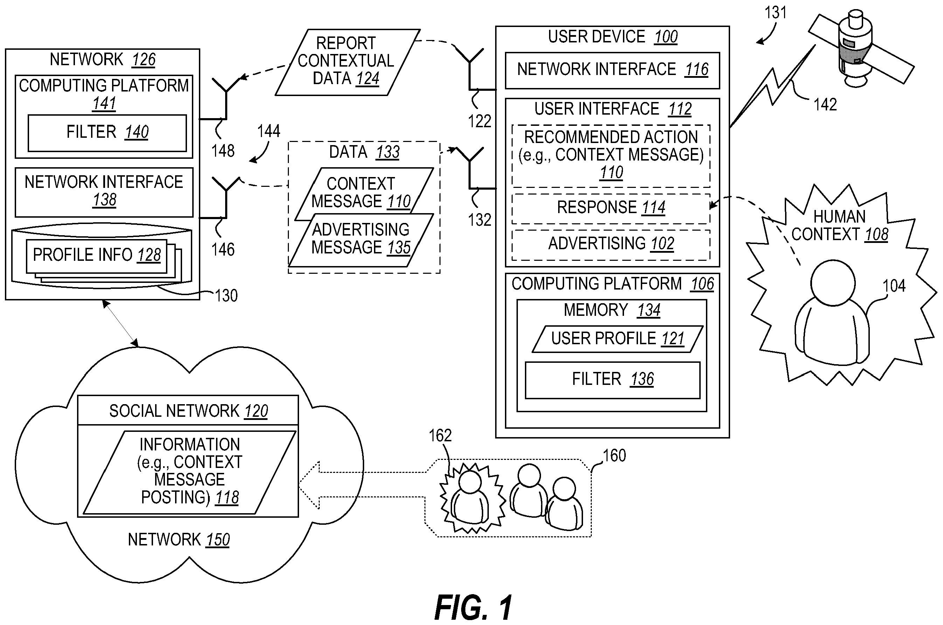

With initial reference to **FIG. 1****,** an apparatus, depicted as a user device **100,** recommends content, depicted as an advertised item **102** (e.g., goods or service, media content, etc.) to a user **104.** A computing platform **106** determines a human context (e.g., environs, location, mood, perceived need, etc.) **108** of the user **104** of the user device **100** and proposes a recommended action (e.g., context message) **110** on a user interface **112** of the user device **100.** In one aspect, a plurality of context messages **110** can be presented for selection. The user interface **112** receives a response (e.g., voice command, touch/key input, acquiescence, manual text input, etc.) **114** from the user **104** to the context message **110.** For example, the response **114** can be edited by the user **104** or substituted for another status message in lieu of the automated one. A network interface **116** communicates information (e.g., a posting **118** to a social network **120)** based upon the response **114.** The computing platform **106** updates a profile **121** of the user **104** based upon the response **114** from the user **104.**

In one aspect, the user device **100** is wireless, portable device, having a transmitter **122** that transmits a report of contextual data **124** to a network **126** that maintains profile information **128** of the user **104** remote to the user device **100.** In the exemplary aspect, the user device **100** has the locally-available profile **121,** such as for a cold-start operation wherein insufficient remote profile information **128** exists, for autonomous operation, or for real-time response in lieu of or in addition to a remote profile repository **130** containing the profile information **128.**

In some of these instances, a communication network **131** of the user device 100 and network **126** cooperate in performing harvesting contextual information from users by use of computer-assisted social blogging in order to improve real-time recommendations. The network **126** can transmit data **133** for presenting to the user **104.** The data **133** can be sent in advance to pre-provision of the data **133** on the user device **100.** Alternatively or in addition, the data **133** can be sent subsequently in response to a detected opportunity. Further, the data **133** can comprise the context message **110.** Alternatively or in addition, the data **133** can comprise an advertising message **135.** A receiver **132** receives the context message **110** from the network **126** in addition to or as an alternative to locally deriving or accessing what is previously provisioned in computer-readable storage medium (e.g., memory) **134.** In another aspect, the receiver **132** receives the advertising item **102** to present to the user **104** via the user interface **112** from the network **126** based upon the remote profile repository **130,** context message **110,** and the response **114.** An objective can be for the advertising item **102** to directly or indirectly address the human context **108.** Alternatively, the computing platform **106** can recommend the advertising item **102** related to the human context **108** and the response **114** for the user interface **112** to present.

The computing platform **106** can employ a filter **136** for the posting **118** prior to communicating to the social network **120.** For instance, the filter **136** can select a user-designated or an appropriate one of a plurality of social networks **120.** The filter **136** can block or edit the context message **110** (e.g., appropriate length, removal of objectionable content, etc.). For example, the filter **136** aligns a topic of a context message **110** to a social network **120** (e.g., dining and personal activities posted on a friend networking site, employment-related posts placed on a professional networking site, etc.). The filter **136** can impose a constraint such as a communication protocol, authentication, type of content, etc., that prompts formatting of the communication.

Alternatively, the network **126** can include a network interface **138** that uses a filter **140** for appropriately communicating with the social network **120.** In an exemplary aspect, the computing platform **106** or a computing platform **141** of the network **126** can determine a location of the user device **100** for determining the human context **108,** depicted as a satellite position system such as a Global Positioning System (GPS) capability **142.** Alternatively, a sector or bearing from a radio access technology can be used, for instance. In some instances, the advertising item **102** can also be based upon location to enhance its suitability.

In an exemplary aspect, the network **126** comprises a Radio Access Network (RAN) **144** having at least one transmitter **146** and at least one receiver **148** that communicates with the user device **100** and provides the network interface **138** that communicates with a terrestrial network **150** that hosts the social network **120.**

In a further aspect, third parties **160** can have a corresponding human context 162 associated with the human context **108** of the user **104.**

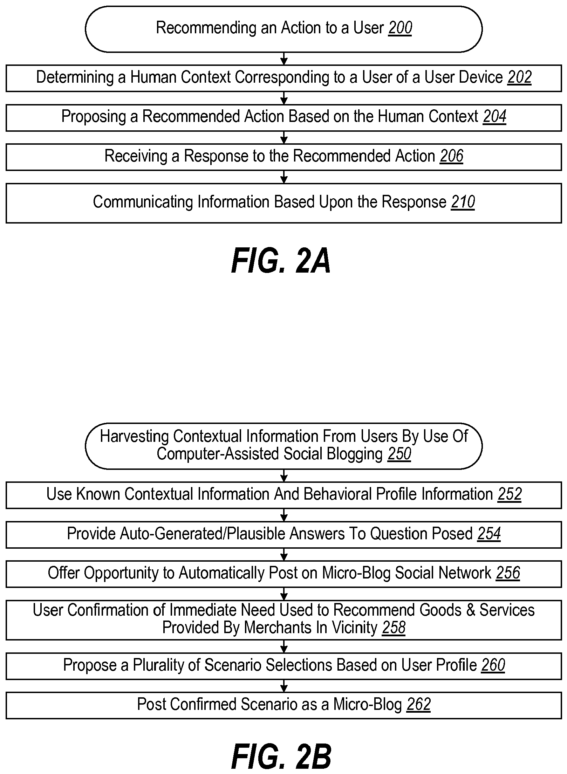

In **FIG. 2A****,** a methodology or sequence of operations **200** is provided for recommending an action to a user. Determining a human context corresponding to a user of a user device is depicted in block **202.** Proposing a recommended action based on the human context is depicted in block **204.** Receiving a response to the recommended action is depicted in block **206.** Communicating information based upon the response is depicted in block **208.**

In an exemplary use depicted in **FIG. 2B****,** a methodology or sequence of operations **250** is performed for harvesting contextual information from users by use of computer-assisted social blogging in order to improve real-time recommendations.

At 252, known contextual information and behavioral profile information (location, time of day, schedule etc) is used to pose contextual status questions to the user (e.g., "Getting thirsty?" "Ready for a coffee break?").

At 254, automatically generated and plausible answers (scenarios) to the question posed are generated, as a method to solicit the actual need or status of the user. These scenarios can be in a personalized form, based on knowledge of the user's profile and suitable for posting to a micro-blogging site ("Mike has been shopping all morning and is ready to stop for a double shot Latte"). In this example, the system would already know that Mike has been shopping through previous contextual or behavioral inputs, and from his profile preferences would know that his favorite type of coffee is a double shot Latte.

At 256, the opportunity to optionally post the selected scenario text to a micro-blogging site as an easy method of maintaining a detailed micro-blog of daily activity is offered. This would otherwise be labor-intensive for the user to maintain. The approach of automatically proposing personalized posts to micro-blogging sites provides benefit to those wishing to maintain a rich micro-blog with minimal effort, but also provides benefit to a recommendation system in surmising the current need of the user.

At 258, the confirmation provided by the user of their status is used as a confirmation of their immediate need or desire and from there goods and services provided either by merchants in the vicinity or by online merchants can be recommended. For instance, the user can confirm being bored and in need of entertainment. In response, an offer is made to download a game, which is selected based upon their interests and profile.

As shown at 260, a subsidiary component of the system is that the system can provide a set of basic options from which the user can select (e.g., "I am hungry," "I am lost," "I want to meet a friend"). Then the system can construct a set of alternative scenarios from which the user can easily select an appropriate one. For instance, "I am hungry" could translate into "Mike is ready to find a steak to eat in downtown San Diego" based on knowledge of Mike's current location and food preferences.

As shown at 262, a subsidiary component of the system is that the system can offer to micro-blog the user status at or after the point of transaction. For instance, "Mike is enjoying a double shot Latte at Starbucks in downtown San Diego" or "Mike is pleased to have finally bought a birthday gift for his son," can provide a viral recommendation capability to Mike's friends.

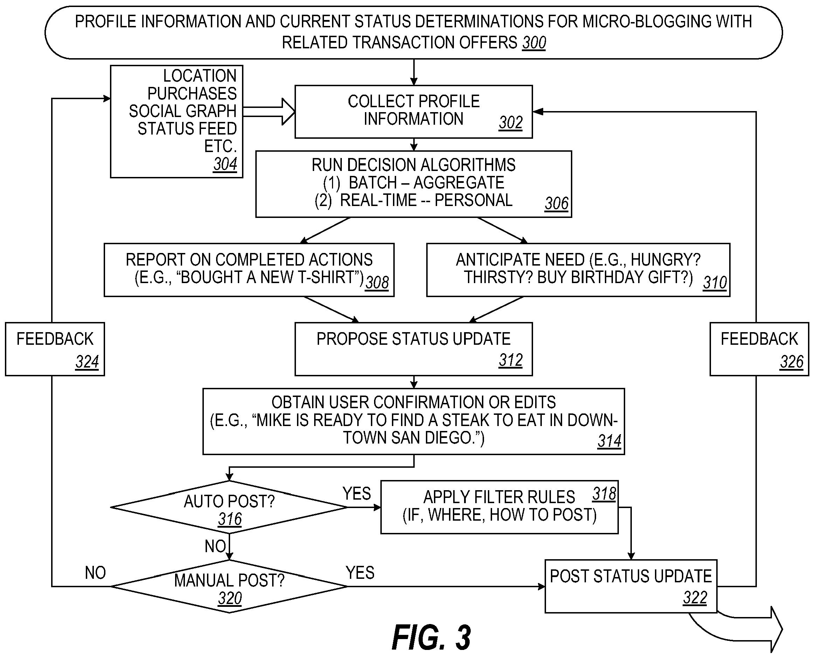

In **FIG. 3****,** a methodology or sequence of operations **300** utilizes profile information and current status determinations for micro-blogging with related transaction offers, according to one aspect. At block **302,** profile information is collected. For instance, location, purchases, social graph, status feed, etc., information **304** can be collected. Decision algorithms can be run upon this information (e.g., batch/ aggregate, real-time personal, etc.) (block **306).** Up-to-date context data can include reporting on completed actions (e.g., bought a new shirt, downloaded a video, etc.), which in some instances can be facilitated by a user device (block **308).**

Based upon these algorithms, profile information, current actions, etc., an anticipated need can be provided as a context message via a user interface of the user device to a user (block **310).** For example, the context message can be "are you hungry?," "are you thirsty?", "need to buy a birthday gift?" (e.g., by referencing friend birthdays on social network and noting location proximate to shopping). Based upon a user confirmation, a status update can be proposed for posting on a micro-blog social network (block **312).** The user can confirm one suggestion, select among a plurality of suggestions, or manually input/edit a status update (block **314).** In some instances, the context messages can be transmitted to the portable user device to prompt proposing a context message on a user interface, can be pre-provisioned on the portable user device, or determined autonomously at the portable user device.

In block **316,** a determination is made that such confirmations should be automatically posted. If so, filtering can be performed prior to posting to communicating to the social network (block **318).** For instance, the appropriate social network for receiving the posting is determined. A constraint for communicating the posting to the social network can be accessed in order to appropriately format the posting. Alternatively or subsequently if not an auto post, a determination can be made in block **320** that the micro-blog is to entail a manual post. For instance, a suggested posting could be displayed with an opportunity to revise it or cancel it before sending. Then the status is posted (block **322).** For example, the profile information can be updated with feedback **324** based on the user choosing not to post this status, thus updating a weighting for the future regarding whether or not to suggest similar postings. Alternatively or in addition, feedback **326** can be based on what content is posted, even if manually done without prompting from the user device.

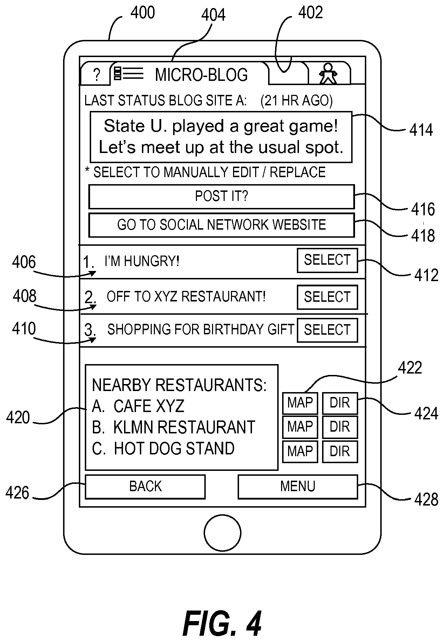

In **FIG. 4****,** an illustrative user device **400** employs a user interface **402,** depicted as a touch screen. It should be appreciated with the benefit of the present disclosure that a user interface consistent with one or more aspects of the present disclosure can utilize a combination of graphical, textual, audio, tactile, etc., methods of input and output. To that end, a micro-blog screen **404** has been selected. A plurality of contextual messages has been presented, specifically "1. I'm hungry!" **406,** "2. Off to XYZ restaurant" **408,** "3. "Shopping for birthday gift" **410.** The user can indicate a confirmation or selection, such as by using a "select" soft key **412.** Alternatively or in addition, a status text field **414** can be filled in automatically, edited by the user, or manually entered. In some instances, a status is automatically posted or manually posted, such as by selecting "post it" soft key **416.** Manual entry can also be performed with the system passively monitoring a user input in order to obtain contextual data, depicted as a "go to social network website" soft key **418.**

Offering of goods and services **420** can be coupled with user interactions such as a wireless purchase transaction or by some selection indicating user interest. This is depicted as a map soft key **422** and directions soft key **424.**

The user device **400** can be a portable user device, such as smart phone, personal data assistant, gaming device, etc., as suggested by utility controls such as a back soft key **426** and a menu soft key **428.**

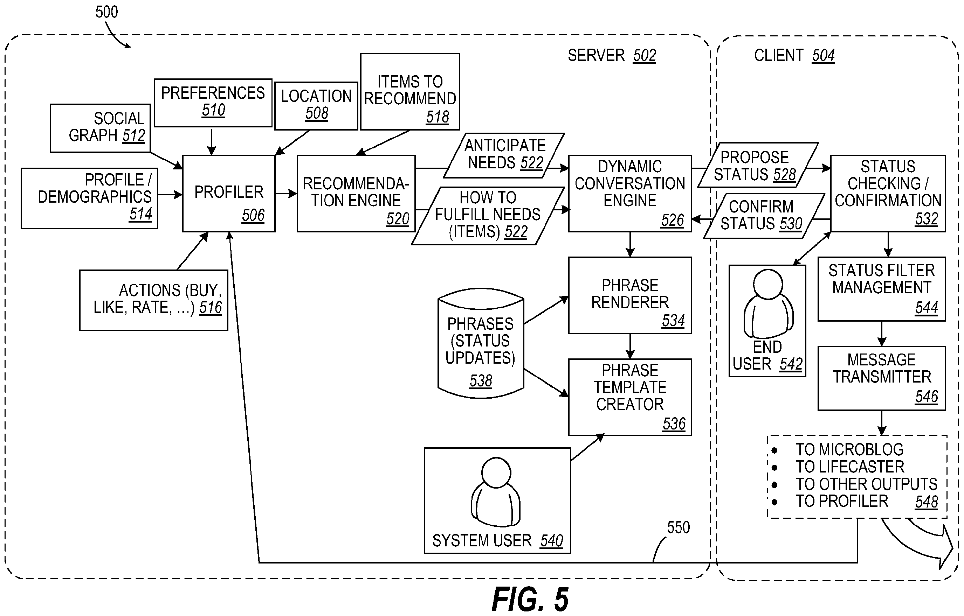

In **FIG. 5****,** a distributed system **500** of a server **502** and a client **504** (e.g., portable user device) performs harvesting contextual information from users by use of computer-assisted social blogging in order to improve real-time recommendations. A profiler **506** receives and maintains information to characterize a user or subscriber, for instance location **508,** preferences (e.g., voluntarily submitted, inferred, etc.) **510,** social graph **512,** profile demographics **514,** and actions (e.g., buy, like, rates, etc.) **516.** Information from the profile **506** and a catalog **518** of items to recommend is received by a recommendation engine **520.** Thereby, outputs are generated, specifically anticipated needs **522** and identified content, goods or services **524** that can fulfill the anticipated needs.

In one aspect, in order to reduce the processing overhead of the client **504,** contextual messages can be generated by the server **502.** A dynamic conversation engine **526** can transmit a propose status communication **528** and receive a confirm status communication **530** from a status checking / confirmation component **532** of the client **504.** On the server side, a phrase renderer **534** and phrase template creator **536** can interact with a repository **538** of phrases (status updates). In one aspect, the phase template creator **536** can be used by an end user **542** rather than a system user **540.** In another aspect, the system user **540** can populate phrases using established templates that in turn are rendered for the user interface (not shown) of the client **504.**

In one aspect, a template can have a mixture of pre-defined words as well as place-holders for personalized text introduced based upon context For example, a template can say "<PERSON> is <NEED> and ready to <ACTION> <ITEM>" where items in < > are tokens or placeholders to later be replaced with personalized text. When customized in real-time or near real-time based upon a profile for user Mike and current human context, the template can propose a context message, "Mike is thirsty and ready to drink a double-shot Latte."

On the client side, the end user **542** can confirm or otherwise interact with the propose status **528.** The confirmed status **530** is processed by a status filter management component **544** that determines whether or how to post a status as a micro-blog on a social networking site. A message transmitter **546** causes a formatted posting to be directed to the appropriate destination **548** with feedback **550** returned to the server **502** for closed-loop profile updates.

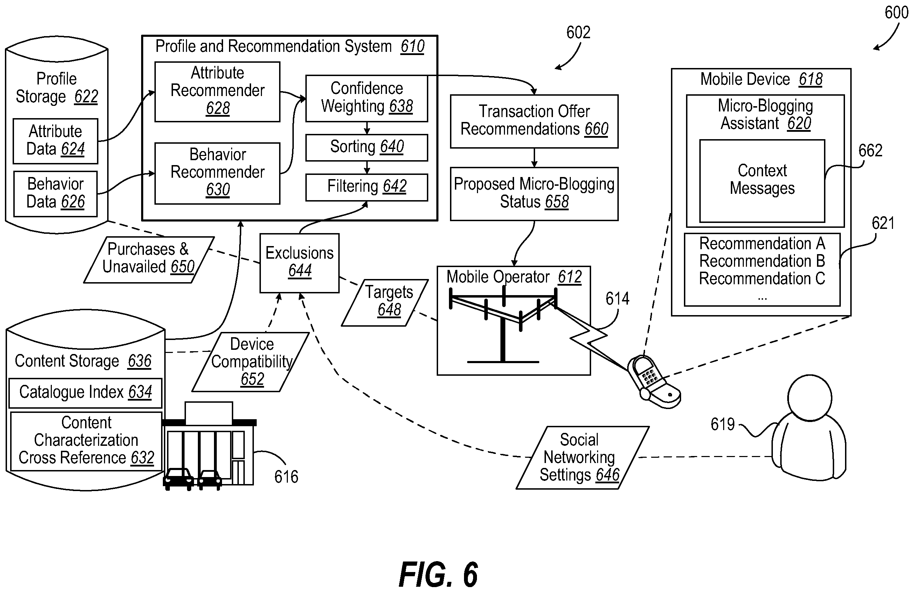

With reference to **FIG. 6****,** in an exemplary aspect, a distributed recommendation system **600** is performed across a wireless communication system **602.** In particular, one or more of the present aspects provide a profile and recommendation system **610** that enables mobile operators **612** of a wireless communication network **614** and their business partners, depicted as content providers **616,** to proactively promote the uptake of content and services to their subscriber base, depicted as a mobile device **618** of a subscriber **619.** In this exemplary implementation, content delivery is enhanced through profiling a user, with micro-blogging being at least one aspect of this profiling. In addition, content delivery can include or be directed to offers for transactions for goods and services as well as for media content usable upon the mobile device **618.**

Initially, a micro-blogging assistant **620** is provisioned with recommendations and can autonomously generate queries, or elicit responses to the recommendations as queries, in order to begin or to enhance characterizing the subscriber **619.** In one example, this is achieved by the generation of a list of recommendations **621** tailored for the particular subscriber **619** for delivery to their mobile device **618.** The recommendations can be displayed either on the portal associated with the mobile operator, or be delivered to the mobile device by mobile messaging, for example.

According to one aspect, stored profile data **622** comprises attribute data **624** or behavior data **626.** Examples of attributes could include interests, preferences, affinities, demographics, actual or past location and so on. A corresponding plurality of recommenders, depicted as an attribute recommender **628** and a behavior recommender **630** associate the respective data **624, 626** with content characterization cross reference **632** of a catalogue index **634** of content storage **636.** Preliminary recommendations from the recommenders **628, 630** have a confidence level assigned by a confidence weighting component **638.** For example, a weak or strong association may be determined. As another example, an attribute or behavior may be weakly determined through inferential analysis of limited occurrences or be strongly determined through explicit inputs or repeated behaviors. The weighted preliminary recommendations can then be sorted by a sorting component **640.**

Prior or subsequent to sorting, a filtering component **642** implements an exclusion **644** to avoid an inappropriate recommendation. Exclusions can be expressly specified by the subscriber **619** as depicted at **646,** such as restricting certain categories of recommendations that would be objectionable. Exclusions can be specified by the mobile operator **612** as depicted at **648,** such as specifying computing platform targets suitable for the content (e.g., audio files suitable for a mobile device with an MP3 media player). Exclusions can also be drawn from profile data **622** depicted at **650,** such as tracking of purchases of content that would otherwise be recommended again or recommendations repeatedly ignored by the subscriber **619.** Exclusions can also be drawn from content providers **616,** which can be the mobile operator **612,** by providing device or software configuration compatibility information **652.** Thereby, mobile devices **618** that cannot successfully use recommended content are excluded.

The recommendations **621** can be generated by an analysis of the subscriber information available to the mobile operator **612** in conjunction with the content and services offered, so as to determine those content and services, which are likely to be of the most interest to the subscriber. In particular, the profile and recommendation system **610** also enables the recommendations to be delivered to the subscriber **619** at those times which have been determined to be when the subscriber **619** is most amenable to purchasing based on attribute or behavior assessment as an individual or group member. The profile and recommendation system is also adapted to generate promotions, when it is desired to actively promote a particular content or service to its subscriber base.

The exclusion **644,** or another portion of the profile and recommendation system **610,** can advantageously incorporate the filter component **642** that appropriately facilitates micro-blogging suggestions, profile updating, and recommending related transaction offers (e.g., content, goods, services, etc.). Such actions are depicted as a proposed micro-blogging status component **658** and a transaction offer recommendations component **660.** These are depicted as affecting the micro-blogging assistant **620** of the mobile device **618** by presenting context messages **662** and recommendations **621.** A user **619** can input social networking settings **646** in order to associate auto or manual micro-blogging with a particular social network as well as related preferences.

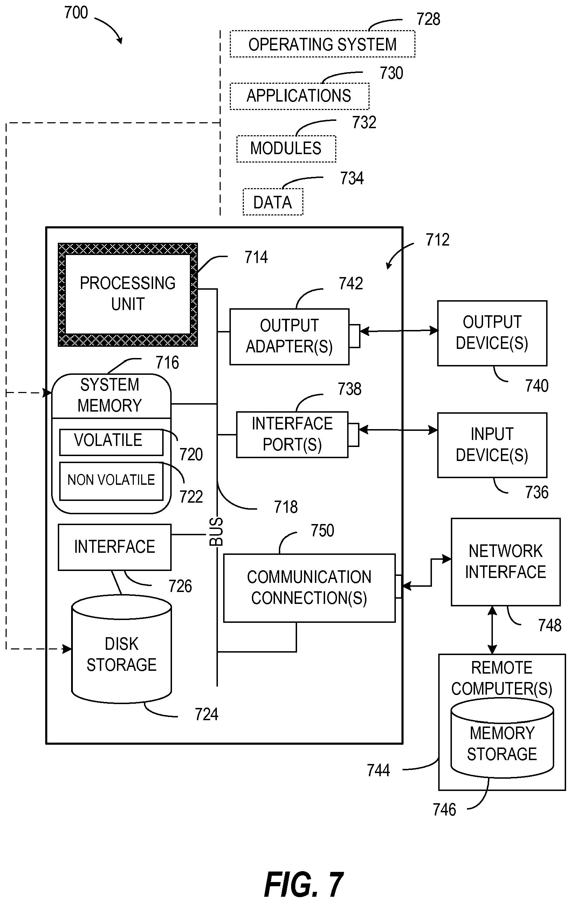

With reference to **FIG. 7****,** an exemplary computing environment **700** for implementing various aspects of the claimed subject matter includes a computer **712.** The computer **712** includes a processing unit **714,** a system memory **716,** and a system bus **718.** The system bus **718** couples system components including, but not limited to, the system memory **716** to the processing unit **714.** The processing unit **714** can be any of various available processors. Dual microprocessors and other multiprocessor architectures also can be employed as the processing unit **714.**

The system bus **718** can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 794), and Small Computer Systems Interface (SCSI).

The system memory **716** includes volatile memory **720** and nonvolatile memory **722.** The basic input/output system (BIOS), containing the basic routines to transfer information between elements within the computer **712,** such as during start-up, is stored in nonvolatile memory **722.** By way of illustration, and not limitation, nonvolatile memory **722** can include read only memory (ROM), programmable ROM (PROM), electrically programmable ROM (EPROM), electrically erasable programmable ROM (EEPROM), or flash memory. Volatile memory **720** includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM).

Computer **712** also includes removable/non-removable, volatile/non-volatile computer storage media. **FIG. 7** illustrates, for example, disk storage **724.** Disk storage **724** includes, but is not limited to, devices like a magnetic disk drive, floppy disk drive, tape drive, Jaz drive, Zip drive, LS-100 drive, flash memory card, or memory stick. In addition, disk storage **724** can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices **724** to the system bus **718,** a removable or non-removable interface is typically used such as interface **726.**

It is to be appreciated that **FIG. 7** describes software that acts as an intermediary between users and the basic computer resources described in the suitable operating environment **700.** Such software includes an operating system **728.** Operating system **728,** which can be stored on disk storage **724,** acts to control and allocate resources of the computer system **712.** System applications **730** take advantage of the management of resources by operating system **728** through program modules **732** and program data **734** stored either in system memory **716** or on disk storage **724.** It is to be appreciated that the claimed subject matter can be implemented with various operating systems or combinations of operating systems.

A user enters commands or information into the computer **712** through input device(s) **736.** Input devices **736** include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit **714** through the system bus **718** via interface port(s) **738.** Interface port(s) **738** include, for example, a serial port, a parallel port, a game port, and a universal serial bus (USB). Output device(s) **740** use some of the same type of ports as input device(s) **736.** Thus, for example, a USB port may be used to provide input to computer **712** and to output information from computer **712** to an output device **740.** Output adapter **742** is provided to illustrate that there are some output devices **740** like monitors, speakers, and printers, among other output devices **740,** which require special adapters. The output adapters **742** include, by way of illustration and not limitation, video and sound cards that provide a means of connection between the output device **740** and the system bus **718.** It should be noted that other devices and/or systems of devices provide both input and output capabilities such as remote computer(s) **744.**

Computer **712** can operate in a networked environment using logical connections to one or more remote computers, such as remote computer(s) **744.** The remote computer(s) **744** can be a personal computer, a server, a router, a network PC, a workstation, a microprocessor based appliance, a peer device or other common network node and the like, and typically includes many or all of the elements described relative to computer **712.** For purposes of brevity, only a memory storage device **746** is illustrated with remote computer(s) **744.** Remote computer(s) **744** is logically connected to computer **712** through a network interface **748** and then physically connected via communication connection **750.** Network interface **748** encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) **750** refers to the hardware/software employed to connect the network interface **748** to the bus **718.** While communication connection **750** is shown for illustrative clarity inside computer **712,** it can also be external to computer **712.** The hardware/software necessary for connection to the network interface **748** includes, for exemplary purposes only, internal and external technologies such as, modems including regular telephone grade modems, cable modems and DSL modems, ISDN adapters, and Ethernet cards.

In one exemplary aspect, recommendations can be provided as disclosed in U.S. Patent Application Serial Number 12/237,864, "RECOMMENDATION GENERATION SYSTEMS, APPARATUS AND METHODS" to O'Donoghue et al., filed September 25, 2008, published as Publ. No. 20090163183 A1 on June 25, 2009, which claimed priority to Provisional Application No. 60/997,570 of the same title filed Oct. 4, 2007, both assigned to the assignee hereof and hereby expressly incorporated by reference herein.

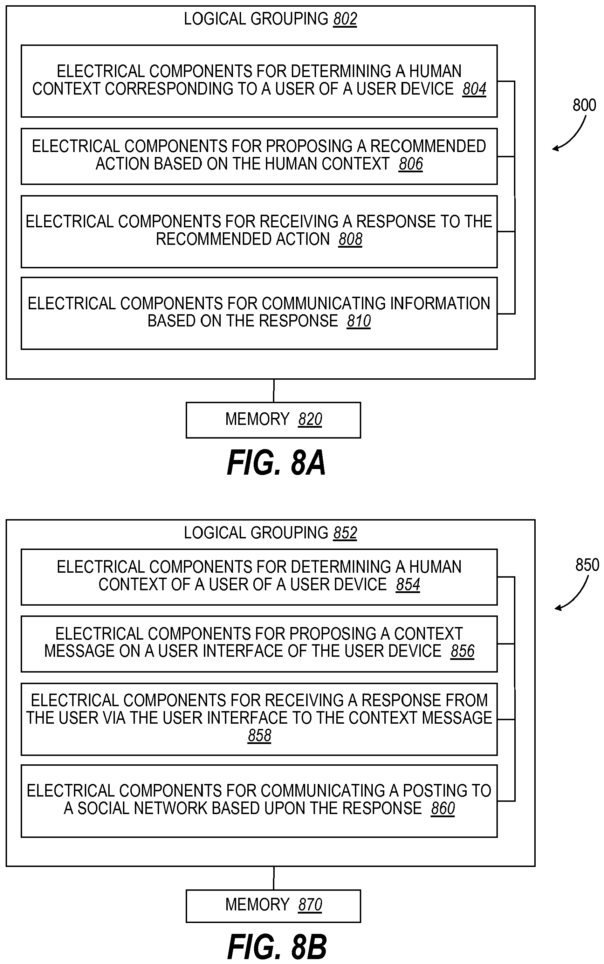

With reference to **FIG. 8A****,** illustrated is a system **800** for recommending an action to a user. For example, system **800** can reside at least partially within user equipment (UE). It is to be appreciated that system **800** is represented as including functional blocks, which can be functional blocks that represent functions implemented by a computing platform, processor, software, or combination thereof (e.g., firmware). System **800** includes a logical grouping **802** of electrical components that can act in conjunction. For instance, logical grouping **802** can include an electrical component for determining a human context corresponding to a user of a user device **804.** Moreover, logical grouping **802** can include an electrical component for proposing a recommended action based on the human context **806.** For another instance, logical grouping **802** can include an electrical component for receiving a response to the recommended action **808.** For an additional instance, logical grouping **802** can include an electrical component for communicating information based upon the response **810.** Additionally, system **800** can include a memory **820** that retains instructions for executing functions associated with electrical components **804-810.** While shown as being external to memory **820,** it is to be understood that one or more of electrical components **804-810** can exist within memory **820.**

With reference to **FIG. 8B****,** illustrated is a system **850** for harvesting contextual information from users by use of computer-assisted social blogging in order to improve real-time recommendations, according to one aspect. For example, system **850** can reside at least partially within user equipment (UE). It is to be appreciated that system **850** is represented as including functional blocks, which can be functional blocks that represent functions implemented by a computing platform, processor, software, or combination thereof (e.g., firmware). System **850** includes a logical grouping **852** of electrical components that can act in conjunction. For instance, logical grouping **852** can include an electrical component for determining a human context of a user of a user device **854.** Moreover, logical grouping **852** can include an electrical component for proposing a context message on a user interface of the user device **856.** For another instance, logical grouping **852** can include an electrical component for receiving a response from the user via the user interface to the context message **858.** For an additional instance, logical grouping **852** can include an electrical component for communicating a posting to a social network based upon the response **860.** Additionally, system **850** can include a memory **870** that retains instructions for executing functions associated with electrical components **854-860.** While shown as being external to memory **870,** it is to be understood that one or more of electrical components **854-860** can exist within memory **870.**

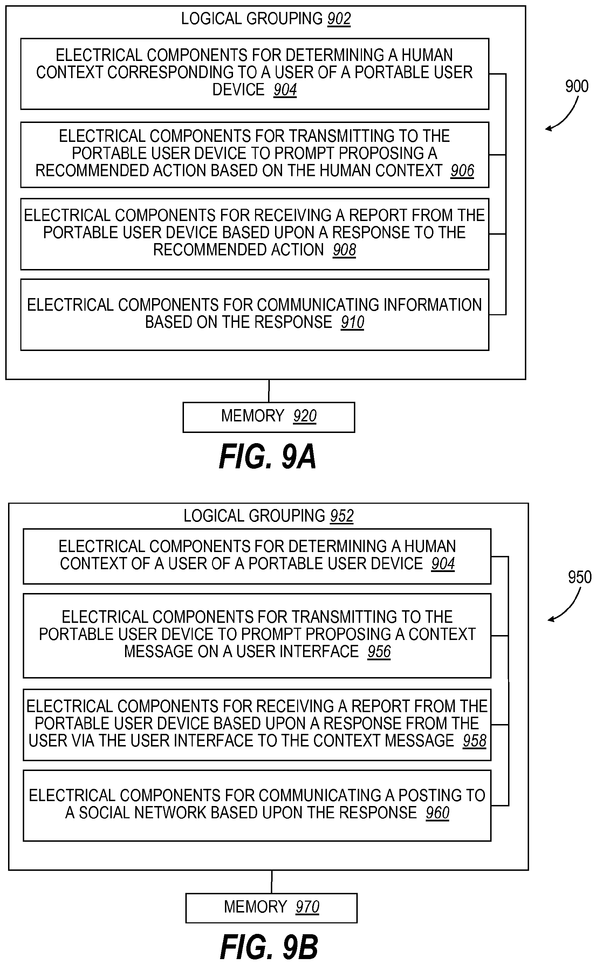

With reference to **FIG. 9A****,** illustrated is a system **900** for recommending an action to a user. For example, system **900** can reside at least partially within a network entity. It is to be appreciated that system **900** is represented as including functional blocks, which can be functional blocks that represent functions implemented by a computing platform, processor, software, or combination thereof (e.g., firmware). System **900** includes a logical grouping **902** of electrical components that can act in conjunction. For instance, logical grouping **902** can include an electrical component for determining a human context corresponding to a user of a portable user device **904.** Moreover, logical grouping **902** can include an electrical component for transmitting to the portable user device to prompt proposing a recommended action based on the human context **906.** For another instance, logical grouping **902** can include an electrical component for receiving a report from the portable user device based upon a response to the recommended action **908.** For an additional instance, logical grouping **902** can include an electrical component for communicating information based upon the response **910.** Additionally, system **900** can include a memory **920** that retains instructions for executing functions associated with electrical components **904-910.** While shown as being external to memory **920,** it is to be understood that one or more of electrical components **904-910** can exist within memory **920.**

With reference to **FIG. 9B****,** illustrated is a system **950** for harvesting contextual information from users by use of computer-assisted social blogging in order to improve real-time recommendations. For example, system **950** can reside at least partially within a network entity. It is to be appreciated that system **950** is represented as including functional blocks, which can be functional blocks that represent functions implemented by a computing platform, processor, software, or combination thereof (e.g., firmware). System **950** includes a logical grouping **952** of electrical components that can act in conjunction. For instance, logical grouping **952** can include an electrical component for determining a human context of a user of a portable user device **954.** Moreover, logical grouping **952** can include an electrical component for transmitting to the portable user device to prompt proposing a context message on a user interface **956.** For another instance, logical grouping **952** can include an electrical component for receiving a report from the portable user device based upon a response from the user via the user interface to the context message **958.** For an additional instance, logical grouping **952** can include an electrical component for communicating a posting to a social network based upon the response **960.** Additionally, system **950** can include a memory **970** that retains instructions for executing functions associated with electrical components **954-960.** While shown as being external to memory **970,** it is to be understood that one or more of electrical components **954-960** can exist within memory **970.**

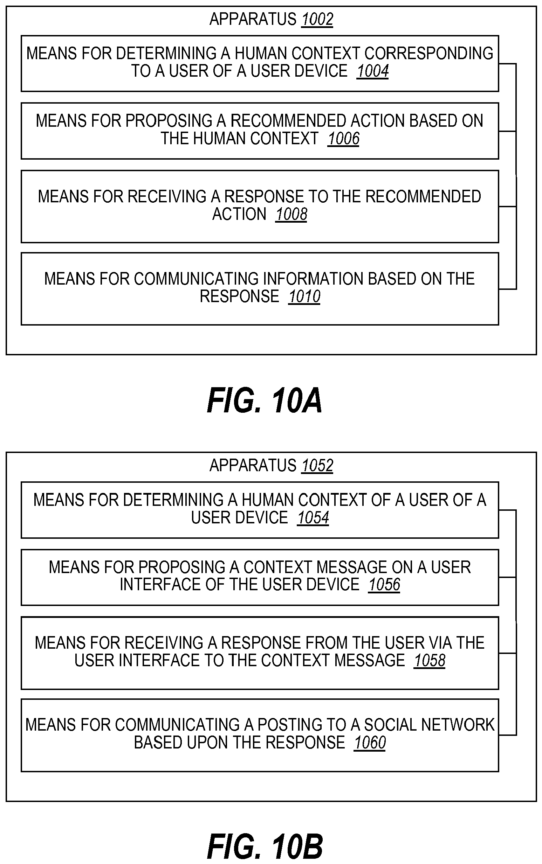

In **FIG. 10A****,** an apparatus **1002** is depicted for recommending an action to a user. Means **1004** are provided for determining a human context of a user of a user device. Means **1006** are provided for proposing a recommended action based on the human context. Means **1008** are provided for receiving a response to the recommended action. Means **1010** are provided for communicating information based upon the response.

In **FIG. 10B****,** an apparatus **1052** is depicted for harvesting contextual information from users by use of computer-assisted social blogging in order to improve real-time recommendations. Means **1054** are provided for determining a human context of a user of a user device. Means **1056** are provided for proposing a context message on a user interface of the user device. Means **1058** are provided for receiving a response from the user via the user interface to the context message. Means **1060** are provided for communicating a posting to a social network based upon the response.

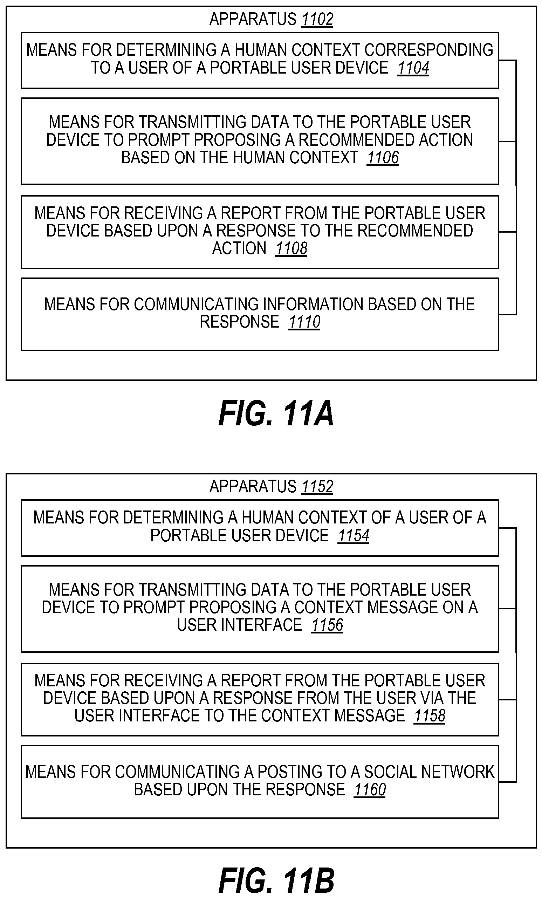

In **FIG. 11A****,** an apparatus **1102** is depicted for recommending an action to a user. Means **1104** are provided for determining a human context corresponding to a user of a portable user device. Means **1106** are provided for transmitting data to the portable user device to prompt proposing a recommended action based on the human context. Means **1108** are provided for receiving a report from the portable user device based upon a response to the recommended action. Means **1110** are provided for communicating information based upon the response.

In **FIG. 11B****,** an apparatus **1152** is depicted for harvesting contextual information from users by use of computer-assisted social blogging in order to improve real-time recommendations. Means **1154** are provided for determining a human context of a user of a portable user device. Means **1156** are provided for transmitting data to the portable user device to prompt proposing a context message on a user interface. Means **1158** are provided for receiving a report from the portable user device based upon a response from the user via the user interface to the context message. Means **1160** are provided for communicating a posting to a social network based upon the response.

Variations, modification, and other implementations of what is described herein will occur to those of ordinary skill in the art without departing from the spirit and scope of the disclosure as claimed. Accordingly, the disclosure is to be defined not by the preceding illustrative description but instead by the scope of the following claims.

## Claims

1. A method performed by a user device (100) for recommending an action to a user, the method comprising:
determining (202) up-to-date user context information (108) corresponding to a user of the user device (100) based on user profile information;
determining an anticipated need of the user based on the determined up-to-date user context information;
presenting a context message to the user based on the determined anticipated need;
presenting one or more status update messages (406, 408, 410) to the user based on the user confirming the anticipated need presented in the context message;
proposing (204) to the user a recommended action of posting one of the status update messages to a social network based on the confirmed anticipated need (120);
receiving (206) a response (114) that confirms or edits one of the status update messages; and
communicating (210) the confirmed or edited status update message to the social network based upon the response.

2. The method of claim 1, wherein the presenting the context message is further based on one of: an autonomous determination by the user device or receiving a context message from a server to prompt presenting of the context message.

3. The method of claim 1, further comprising:
associating a third party with the user; and
accessing a corresponding human context for the third party,
wherein determining the up-to-date user context information (108) for the user is based upon the corresponding human context for the third party.

4. The method of claim 1, further comprising updating a profile (121, 128) of the user based upon the response from the user.

5. The method of claim 4, further comprising:
reporting contextual data (124) to a network (126) that maintains the profile (128) of the user remote to the user device (100), and preferably further comprising:
receiving a context message from the network (126); or
receiving a transaction offer to present to the user via the user interface (112) from the network (126) based upon the profile (128), contextual data (124), and the response.

6. The method of claim 1, further comprising:
recommending a transaction offer related to the up-to-date user context information (108) and the response; and
presenting the transaction offer on the user interface (112).

7. The method of claim 1, further comprising receiving a confirmation as the response to the context message (110).

8. The method of claim 7, further comprising:
proposing a plurality of context messages (110) on the user interface (112) of the user device (100);
receiving a confirmation of a selected one of the plurality of context messages; and
communicating the posting to the social network (120) based on the selected one of the plurality of context messages.

9. The method of claim 4, further comprising receiving a report of contextual data (124) from the user device (100), and preferably:
the method further comprises receiving the contextual data regarding usage selections made via the user device; or
transmitting the data further comprises transmitting a transaction offer to present to the user via the user interface (112) based upon the profile (128), contextual data, and the response.

10. The method of claim 2, wherein presenting the context message further comprises:
transmitting a transaction offer related to the up-to-date user context information (108) and the response to prompt the user device (100) to present the transaction offer on the user interface (112); or
transmitting a plurality of transaction offers for selection by the user device in response to the up-to-date user context information (108) and the response.

11. The method of claim 7, further comprising:
transmitting a plurality of context messages (110) to the user device (100) for proposing on the user interface (112);
receiving a confirmation of a selected one of the plurality of context messages; and
communicating the posting to the social network (120) based on the selected one of the plurality of context messages.

12. The method of claim 7, further comprising:
filtering the posting prior to communicating to the social network (120); or
filtering the posting prior to communicating to the social network and determining the social network for receiving the posting; or
filtering the posting prior to communicating to the social network, determining the social network for receiving the posting, accessing a constraint for communicating the posting to the social network, and formatting the posting in accordance with the constraint.

13. The method of claim 1, further comprising:
determining a location of the user device (100) and determining the up-to-date user context information (108) based upon the location, and preferably further comprising identifying the transaction offer based upon the location of the user device; or
proposing a recommended action based on the up-to-date user context information (108) related to a purchase transaction, receiving the confirmation of the context messages (110) to execute the purchase transaction and communicating the posting to the social network (120) based upon the purchase transaction.

14. A computer program product for recommending an action to a user, comprising:
a computer-readable storage medium, comprising instructions for causing a computer to perform a method in accordance with any of the preceding claims.

15. A user device for recommending an action to a user, comprising means for performing a method in accordance with any of claims 1 to 13.

## Patentansprüche

1. Ein Verfahren, das durch eine Nutzereinrichtung (100) durchgeführt wird zum Empfehlen einer Aktion an einen Nutzer, wobei das Verfahren Folgendes aufweist:
Bestimmen (202) von aktueller Nutzerkontextinformation (108) entsprechend einem Nutzer der Nutzereinrichtung (100) basierend auf Nutzerprofilinformation;
Bestimmen eines antizipierten Bedarfs des Nutzers basierend auf der bestimmten aktuellen Nutzerkontextinformation;
Darstellen einer Kontextnachricht gegenüber dem Nutzer basierend auf dem bestimmten antizipierten Bedarf;
Darstellen einer oder mehrerer Statusaktualisierungsnachrichten (406, 408, 410) gegenüber dem Nutzer basierend darauf, dass der Nutzer den antizipierte Bedarf bestätigt, der in der Kontextnachricht dargestellt wird;
Vorschlagen (204), gegenüber dem Nutzer, einer empfohlenen Aktion zum Posten einer der Statusaktualisierungsnachrichten in ein soziales Netzwerk basierend auf dem bestätigten antizipierten Bedarf (120);
Empfangen (206) einer Antwort (114), die eine der Statusaktualisierungsnachrichten bestätigt oder bearbeitet; und
Kommunizieren (210) der bestätigten oder bearbeiteten Statusaktualisierungsnachricht an das soziale Netzwerk basierend auf der Antwort.

2. Verfahren nach Anspruch 1, wobei das Darstellen der Kontextnachricht weiter auf einem von Folgendem basiert: einer autonomen Bestimmung durch die Nutzereinrichtung oder Empfangen einer Kontextnachricht von einem Server, um das Darstellen der Kontextnachricht zu veranlassen.

3. Verfahren nach Anspruch 1, das weiter Folgendes aufweist:
Assoziieren eines Dritten mit dem Nutzer; und
Zugreifen auf einen entsprechenden menschlichen Kontext für den Dritten,
wobei das Bestimmen der aktuellen Nutzerkontextinformation (108) für den Nutzer auf dem entsprechenden menschlichen Kontext für den Dritten basiert.

4. Verfahren nach Anspruch 1, das weiter Aktualisieren eines Profils (121, 128) des Nutzers basierend auf der Antwort von dem Nutzer aufweist.

5. Verfahren nach Anspruch 4, das weiter Folgendes aufweist:
Berichten von Kontextdaten (124) an ein Netzwerk (126), dass das Profil (128) des Nutzers entfernt von der Nutzereinrichtung (100) verwaltet, und das vorzugsweise weiter Folgendes aufweist:
Empfangen einer Kontextnachricht von dem Netzwerk (126); oder
Empfangen eines Transaktionsangebots zur Darstellung gegenüber dem Nutzer über die Nutzerschnittstelle (112) von dem Netzwerk (126) basierend auf dem Profil (128), Kontextdaten (124) und der Antwort.

6. Verfahren nach Anspruch 1, das weiter Folgendes aufweist:
Empfehlen eines Transaktionsangebots, das mit der aktuellen Nutzerkontextinformation (108) und der Antwort in Beziehung steht; und
Darstellen des Transaktionsangebots auf der Nutzerschnittstelle (112).

7. Verfahren nach Anspruch 1, das weiter Empfangen einer Bestätigung als die Antwort auf die Kontextnachricht (110) aufweist.

8. Verfahren nach Anspruch 7, das weiter Folgendes aufweist:
Vorschlagen einer Vielzahl von Kontextnachrichten (110) auf der Nutzerschnittstelle (112) der Nutzereinrichtung (100);
Empfangen einer Bestätigung einer ausgewählten der Vielzahl von Kontextnachrichten; und
Kommunizieren des Posts an das soziale Netzwerk (120) basierend auf der ausgewählten der Vielzahl von Kontextnachrichten.

9. Verfahren nach Anspruch 4, das weiter Empfangen eines Berichts von Kontextdaten (124) von der Nutzereinrichtung (100) aufweist, und wobei vorzugsweise:
das Verfahren weiter Empfangen der Kontextdaten bezüglich Nutzungsauswahlen aufweist, die über die Nutzereinrichtung vorgenommen wurden; oder
das Senden der Daten weiter Senden eines Transaktionsangebots zur Darstellung gegenüber dem Nutzer über die Nutzerschnittstelle (112) basierend auf dem Profil (128), Kontextdaten und der Antwort aufweist.

10. Verfahren nach Anspruch 2, wobei das Darstellen der Kontextnachricht weiter Folgendes aufweist:
Senden eines Transaktionsangebots, das mit der aktuellen Nutzerkontextinformation (108) und der Antwort in Beziehung steht, um die Nutzereinrichtung (100) zu veranlassen das Transaktionsangebot auf der Nutzerschnittstelle (112) darzustellen; oder
Senden einer Vielzahl von Transaktionsangeboten zur Auswahl durch die Nutzereinrichtung ansprechend auf die aktuelle Nutzerkontextinformation (108) und die Antwort.

11. Verfahren nach Anspruch 7, das weiter Folgendes aufweist:
Senden einer Vielzahl von Kontextnachrichten (110) an die Nutzereinrichtung (100) zum Vorschlagen auf der Nutzerschnittstelle (112);
Empfangen einer Bestätigung einer ausgewählten der Vielzahl von Kontextnachrichten; und
Kommunizieren des Posts an das soziale Netzwerk (120) basierend auf der ausgewählten der Vielzahl von Kontextnachrichten.

12. Verfahren nach Anspruch 7, das weiter Folgendes auf:
Filtern des Posts vor dem Kommunizieren an das soziale Netzwerk (120); oder
Filtern des Posts vor dem Kommunizieren an das soziale Netzwerk und Bestimmen des sozialen Netzwerks zum Empfangen des Posts; oder
Filtern des Posts vor dem Kommunizieren an das soziale Netzwerk, Bestimmen des sozialen Netzwerks zum Empfangen des Posts, Zugreifen auf eine Beschränkung zum Kommunizieren des Posts an das soziale Netzwerk und Formatieren des Posts gemäß der Beschränkung.

13. Verfahren nach Anspruch 1, das weiter Folgendes aufweist:
Bestimmen eines Standortes der Nutzereinrichtung (100) und Bestimmen der aktuellen Nutzerkontextinformation (108) basierend auf dem Standort, und
das vorzugsweise weiter Identifizieren des Transaktionsangebots basierend auf dem Standort der Nutzereinrichtung aufweist; oder
Vorschlagen einer empfohlenen Aktion basierend auf der aktuellen Nutzerkontextinformation (108), die in Beziehung steht zu einer Erwerbstransaktion, Empfangen der Bestätigung der Kontextnachrichten (110) zum Ausführen der Erwerbstransaktion und Kommunizieren des Posts an das soziale Netzwerk (120) basierend auf der Erwerbstransaktion.

14. Ein Computerprogrammprodukt zum Empfehlen einer Aktion an einen Nutzer, das Folgendes aufweist:
ein computerlesbares Speichermedium, das Instruktionen aufweist um einen Computer zu veranlassen ein Verfahren gemäß einem der vorhergehenden Ansprüche durchzuführen.

15. Eine Nutzereinrichtung zum Empfehlen einer Aktion gegenüber einem Nutzer, die Mittel aufweist zum Durchführen eines Verfahrens gemäß einem der Ansprüche 1 bis 13.

## Revendications

1. Un procédé exécuté par un dispositif d'utilisateur (100) destiné à la recommandation d'une action à un utilisateur, le procédé comprenant :
la détermination (202) d'informations de contexte d'utilisateur actualisées (108) correspondant à un utilisateur du dispositif d'utilisateur (100) en fonction d'informations de profil d'utilisateur,
la détermination d'un besoin anticipé de l'utilisateur en fonction des informations de contexte d'utilisateur actualisées déterminées,
la présentation d'un message de contexte à l'utilisateur en fonction du besoin anticipé déterminé,
la présentation d'un ou de plusieurs messages d'actualisation de statut (406, 408, 410) à l'utilisateur en fonction de la confirmation par l'utilisateur du besoin anticipé présenté dans le message de contexte,
la proposition (204) à l'utilisateur d'une action recommandée de publication d'un des message d'actualisation de statut à un réseau social en fonction du besoin anticipé confirmé (120),
la réception (206) d'une réponse (114) qui confirme ou édite un des messages d'actualisation de statut, et
la communication (210) du message d'actualisation de statut confirmé ou édité au réseau social en fonction de la réponse.

2. Le procédé selon la Revendication 1, où la présentation du message de contexte est basée en outre sur un élément parmi : une détermination autonome par le dispositif d'utilisateur ou la réception d'un message de contexte à partir d'un serveur destiné à solliciter la présentation du message de contexte.

3. Le procédé selon la Revendication 1, comprenant en outre :
l'association d'une partie tierce à l'utilisateur, et
l'accès à un contexte humain correspondant pour la partie tierce,
où la détermination des informations de contexte d'utilisateur actualisées (108) pour l'utilisateur est basée sur le contexte humain correspondant pour la partie tierce.

4. Le procédé selon la Revendication 1, comprenant en outre l'actualisation d'un profil (121, 128) de l'utilisateur en fonction de la réponse provenant de l'utilisateur.

5. Le procédé selon la Revendication 4, comprenant en outre :
le signalement de données contextuelles (124) à un réseau (126) qui entretient le profil (128) de l'utilisateur distant du dispositif d'utilisateur (100), et de préférence comprenant en outre :
la réception d'un message de contexte à partir du réseau (126), ou
la réception d'une offre de transaction à présenter à l'utilisateur par l'intermédiaire de l'interface utilisateur (112) à partir du réseau (126) en fonction du profil (128), de données contextuelles (124) et de la réponse.

6. Le procédé selon la Revendication 1, comprenant en outre :
la recommandation d'une offre de transaction relative aux informations de contexte d'utilisateur actualisées (108) et à la réponse, et
la présentation de l'offre de transaction sur l'interface utilisateur (112).

7. Le procédé selon la Revendication 1, comprenant en outre la réception d'une confirmation en tant que réponse au message de contexte (110).

8. Le procédé selon la Revendication 7, comprenant en outre :
la proposition d'une pluralité de messages de contexte (110) sur l'interface utilisateur (112) du dispositif d'utilisateur (100),
la réception d'une confirmation d'un message de contexte sélectionné de la pluralité de messages de contexte, et
la communication de la publication au réseau social (120) en fonction du message de contexte sélectionné de la pluralité de messages de contexte.

9. Le procédé selon la Revendication 4, comprenant en outre la réception d'un rapport de données contextuelles (124) à partir du dispositif d'utilisateur (100), et de préférence :
le procédé comprend en outre la réception des données contextuelles concernant l'utilisation de sélections effectuées par l'intermédiaire du dispositif d'utilisateur, ou
la transmission des données comprend en outre la transmission d'une offre de transaction à présenter à l'utilisateur par l'intermédiaire de l'interface utilisateur (112) en fonction du profil (128), de données contextuelles et de la réponse.

10. Le procédé selon la Revendication 2, où la présentation du message de contexte comprend en outre :
la transmission d'une offre de transaction relative aux informations de contexte d'utilisateur actualisées (108) et à la réponse de façon à solliciter le dispositif d'utilisateur (100) à présenter l'offre de transaction sur l'interface utilisateur (112), ou
la transmission d'une pluralité d'offres de transaction pour une sélection par le dispositif d'utilisateur en réponse aux informations de contexte d'utilisateur actualisées (108) et à la réponse.

11. Le procédé selon la Revendication 7, comprenant en outre :
la transmission d'une pluralité de messages de contexte (110) au dispositif d'utilisateur (100) pour une proposition sur l'interface utilisateur (112),
la réception d'une confirmation d'un message de contexte sélectionné de la pluralité de messages de contexte, et
la communication de la publication au réseau social (120) en fonction du message de contexte sélectionné de la pluralité de messages de contexte.

12. Le procédé selon la Revendication 7, comprenant en outre :
le filtrage de la publication avant la communication au réseau social (120), ou
le filtrage de la publication avant la communication au réseau social et la détermination du réseau social destiné à la réception de la publication, ou
le filtrage de la publication avant la communication au réseau social, la détermination du réseau social destiné à la réception de la publication, l'accès à une contrainte destinée à la communication de la publication au réseau social et la mise en forme de la publication en fonction de la contrainte.

13. Le procédé selon la Revendication 1, comprenant en outre :
la détermination d'un emplacement du dispositif d'utilisateur (100) et la détermination des informations de contexte d'utilisateur actualisées (108) en fonction de l'emplacement, et de préférence comprenant en outre l'identification de l'offre de transaction en fonction de l'emplacement du dispositif d'utilisateur, ou
la proposition d'une action recommandée en fonction des informations de contexte d'utilisateur actualisées (108) relatives à une transaction d'achat, la réception de la confirmation des messages de contexte (110) de façon à exécuter la transaction d'achat et la communication de la publication au réseau social (120) en fonction de la transaction d'achat.

14. Un produit de programme informatique destiné à la recommandation d'une action à un utilisateur, comprenant :
un support à mémoire lisible par ordinateur, contenant des instructions destinées à amener un ordinateur à exécuter un procédé selon l'une quelconque des Revendications précédentes.

15. Un dispositif d'utilisateur destiné à la recommandation d'une action à un utilisateur, comprenant un moyen d'exécution d'un procédé selon l'une quelconque des Revendications 1 à 13.
